# EUROPEAN PATENT SPECIFICATION

(11) **EP 4 135 413 B1**
(45) Date of publication and mention of the grant of the patent: **23.08.2023**
(21) Application number: 21190271.3
(22) Date of filing: 09.08.2021
(51) Int. Cl.: H04W 48/18

(54) **COMMUNICATION NETWORK ARRANGEMENT AND METHOD FOR SELECTING A NETWORK COMPONENT**
KOMMUNIKATIONSNETZANORDNUNG UND VERFAHREN ZUR AUSWAHL EINER NETZWERKKOMPONENTE
AGENCEMENT DE RÉSEAU DE COMMUNICATION ET PROCÉDÉ DE SÉLECTION DE COMPOSANT DE RÉSEAU

(43) Date of publication of application: 15.02.2023
(73) Proprietor: NTT DOCOMO, INC., Chiyoda-Ku Tokyo 100-6150 (JP)
(72) Inventor: SAMA, Malla Reddy, 80687 Munich (DE); THAKOLSRI, Srisakul, 80687 Munich (DE); MINOKUCHI, Atsushi, Tokyo, 100-6150 (JP)
(74) Representative: Viering, Jentschura & Partner mbB Patent- und Rechtsanwälte

(56) References cited:
- EP-A1- 3 648 480
- WO-A1-2020/018012
- GB-A- 2 587 337

## Description

The present disclosure relates to a communication network arrangement, method and computer program for selecting a network component.

In a communication network like a 5G communication network, there may exist multiple service producers for a given service, i.e. multiple components which can provide the same service to a service consumer, in particular network components such as multiple network functions or network functions instances. An example are multiple Session Management Functions (or Session Management Function instances) for providing a session requested by an Access and Mobility Management Function. In such a scenario, the service consumer can select one of the components for a desired service. However, it should be avoided that load distribution becomes skewed, i.e. that computational resources become scarce in some components while being unused in other components. Accordingly, approaches for selection are desirable which allow achieving good load balancing in the communication network.

GB 2 587 337 A (SAMSUNG ELECTRONICS CO LTD [GB]) 31 March 2021 (2021-03-31) discloses a method performed by a first entity, for Network Slice Instance (NSI) load distribution in a network comprising the first entity and a second entity providing slice-level network analytics.

EP 3 648 480 A1 (NTT DOCOMO INC [JP]) 6 May 2020 (2020-05-06) a component of a communication network comprising a component of a core network for serving a mobile terminal.

According to an aspect of the present invention, a communication network arrangement is provided including the features according to claim 1.

According to another aspect of the present invention, a method for selecting a network component according to claim 13 is provided.

According to another aspect of the present invention, a computer program and a computer readable medium are provided by claim 14 including instructions, which, when executed by a computer of a communication network arrangement, make the computer perform the method according to claim 13.

Additional features for advantageous embodiments of the present invention are provided in the dependent claims.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system.
- Figure 2: illustrates a registration of a network function (NF) at an NRF (Network Repository Function) for an NRF based NF selection.
- Figure 3: illustrates a discovery of a network function by another network function with help of an NRF.
- Figure 4: illustrates NWDAF (Network Data Analytics Function)-based NF selection.
- Figure 5: shows an example of a selection by an AMF (Access and Mobility Management Function) of an SMF (Session Management Function) from among an SMF group.
- Figure 6: illustrates a registration of a network function at an NRF for an NRF based NF selection according to an embodiment.
- Figure 7: illustrates NWDAF-based NF selection according to an embodiment.
- Figure 8: illustrates a collection of link load information by an NWDAF according to an embodiment.
- Figure 9: shows a communication network according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

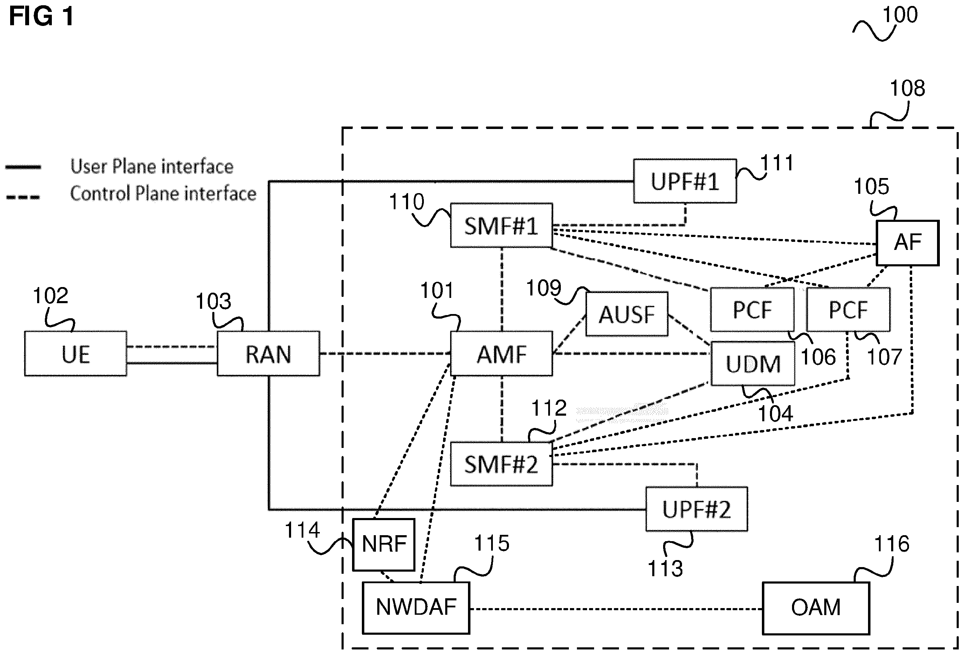

FIG. 1 shows a radio communication system 100, for example configured according to 5G (Fifth Generation) as specified by 3GPP (Third Generation Partnership Project), i.e. for example a 5GS.

The radio communication system 100 includes a mobile radio terminal device 102 such as a LTE (user equipment), nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another wireless communication standard but 5G is herein used as an example. Each radio access network node 103 may provide a radio communication with the mobile radio terminal Example 5 is the communication network arrangement of any one of Examples 1 to 3, wherein, for each second network component, each link provided the second network component corresponds to a network function interface of the second network component and the link loads are loads of the network function interfaces.

Example 6 is the communication network arrangement of Example 5, wherein each network function interface corresponds to a network function service and the link loads are loads of the network function services.

Example 7 is the communication network arrangement of any one of Examples 1 to 6, wherein the first network component is configured to select a network function service of a group of network function services provided by the second network components based on the link loads.

Example 8 is the communication network arrangement of any one of Examples 1 to 7, wherein the information depending on the link loads is link load analytics information derived from the link loads.

Example 9 is the communication network arrangement of Example 8, comprising an analytics component configured to derive the link load analytics information from the link loads and to provide the link load analytics information to the first network component.

Example 10 is the communication network arrangement of Example 9, wherein the analytics component is a Network Data Analytics Function.

Example 11 is the communication network arrangement of Example 9 or 10, wherein the analytics component is configured to determine an overall control plane load from the link loads and loads of the second network components.

Example 12 is the communication network arrangement of any one of Examples 1 to 11, wherein the first and/or the second network component is an Access and Mobility Management Function, or a Session Management Function, or a Policy Control Function or a Service Communications Proxy or Network Exposure Function, or Application Function, or Network Repository Function, or Network Slice Admission Control Function, or Network Slice Specific Authentication and Authorization Function, Network Slice Selection Function, or any other network function in the core network.

Example 13 is the communication network arrangement of any one of Examples 1 to 12, comprising a repository component, wherein each second network component is configured to provide information about the loads of the links it provides to the repository component and wherein the repository component is configured to provide the information about the load of the links provided by the second network components to the first network component and the first network component is configured to select the second network component based on the provided information or is configured to generate a list of suitable second network components from the link loads and the first network component is configured to take a second network component from the list as selected second network component.

Example 14 is the communication network arrangement of Example 13, wherein the repository component is configured to generate a list of suitable network function services from the link loads and the first network component is configured to take a network function service from the list as selected network function service.

Example 15 is a method for selecting a network component of a group of network components, wherein each network component provides multiple links, comprising selecting a network component from the group of network components based on information depending on link loads of the links provided by the second network components.

It should be noted that one or more of the features of any of the examples above may be combined with any one of the other examples. In particular, the examples described in context of the communication network arrangement are analogously valid for the method and vice versa.

According to further embodiments, a computer program and a computer readable medium including instructions, which, when executed by a computer, make the computer perform the method described above are provided.

In the following, various examples will be described in more detail.

FIG. 1 shows a radio communication system 100, for example configured according to 5G (Fifth Generation) as specified by 3GPP (Third Generation Partnership Project), i.e. for example a 5GS.

The radio communication system 100 includes a mobile radio terminal device 102 such as a UE (user equipment), nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another wireless communication standard but 5G is herein used as an example. Each radio access network node 103 may provide a radio communication with the mobile radio terminal device 102 over an air interface. It should be noted that the radio access network 103 may include any number of radio access network nodes.

The radio communication system 100 further includes a core network (5GC) 108 including an Access and Mobility Management Function (AMF) 101 connected to the RAN 103 and a Unified Data Management (UDM) 104. Here and in the following examples, the UDM may further consist of the actual UE's subscription database, which is known as, for example, the UDR (Unified Data Repository). The core network 108 further includes an AUSF (Authentication Server Function) 109 and one or more PCFs (Policy Control Functions), in this example a first PCF 106 and a second PCF 107.

The core network 108 further includes multiple Session Management Functions (SMFs) or multiple SMF instances in this example a first Session Management Function (SMF) 110 and a second Session Management Function (SMF) 112. For example, there can be multiple SMFs for different network slices in the network. However, for each network slice there can be multiple SMF instances for distributing of load. In other words, there could be multiple NFs dedicated to different network slices and on top of that there could be multiple SMF instances for the same network slice. Similarly, the core network 108 comprises multiple User Plane Functions (UPFs) or UPF instances, in this example a first User Plane Function (UPF) 111 a second User Plane Function (UPF) 113. The SMFs 110, 112 are for handling PDU (Protocol Data Unit) sessions, i.e. for creating, updating and removing PDU sessions and managing session context with the User Plane Function (UPF).

The core network 108 further includes an application function (AF) 105. The AF 105 is shown to be directly connected to the SMFs 110, 112 and PCFs 106, 107 but may also be connected to them via an NEF (Network Exposure Function), in particular in case the AF 105 is maintained by a third party (i.e. a party other than the operation of the mobile radio communication system 100). In this case, all communication between the core network functions (NF) and AF (and vice versa) takes place via NEF.

The AF 105 enables an application to request the 5G system 100 to support specific QoS (Quality of Service) policies for a UE 102 that establishes a PDU session to provide a communication service for that application.

The SMFs 110, 112 are for handling PDU (Protocol Data Unit) sessions, i.e. for creating, updating and removing PDU sessions and managing session context with the User Plane Function (UPF).

The core network 108 further includes and NRF (Network Repository Function) 114, an NWDAF (Network Data Analytics Function) 115 and an OAM (Operation, Administration and Maintenance) 116. For simplicity, the NRF 114 and the NWDAF 115 are shown to be connected to the AMF 101 and the NWDAF 115 and the OAM 116 are shown to be connected to the NRF 114 but they may also be connected to other components (e.g. NRF 114 may be connected to the SMFs 110, 112 etc.).

It should be noted that network functions may also communicate via a Service Communications Proxy (SCP). SCP manages registration and discovery for communication within the service mesh and communication across service mesh boundaries. A 5G NF service consumer may communicate through the SCP (by sending a request) and the SCP selects a target 5G NF service producer based on the request routes the request to the service producer. What routing and selection policies a SCP applies for a given request is determined by routing and selection policies pushed by a service mesh controller.

The RAN 103 and the core network 108 form the network side of the mobile radio communication system, or, in other words, form the (mobile radio) communication network. The mobile radio communication network and the mobile terminals accessing the mobile radio communication network form, together, the mobile radio communication system.

When a NF needs another network function for a certain service, e.g. AMF 101 needs an SMF 110, 112 for provision of a session it performs NF discovery and selection.

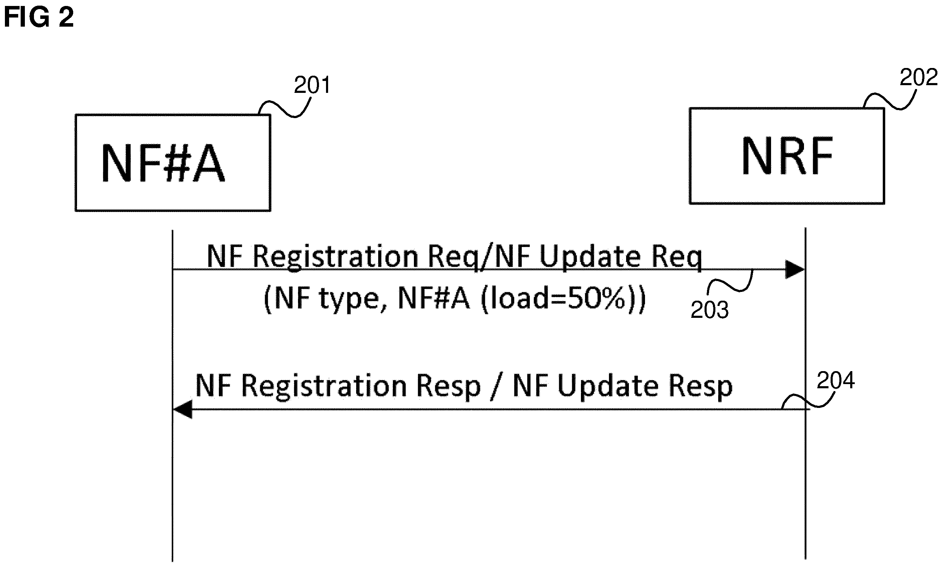

Figure 2 illustrates a registration of a first network function (NF#A) 201 at an NRF 202 for an NRF based NF selection.

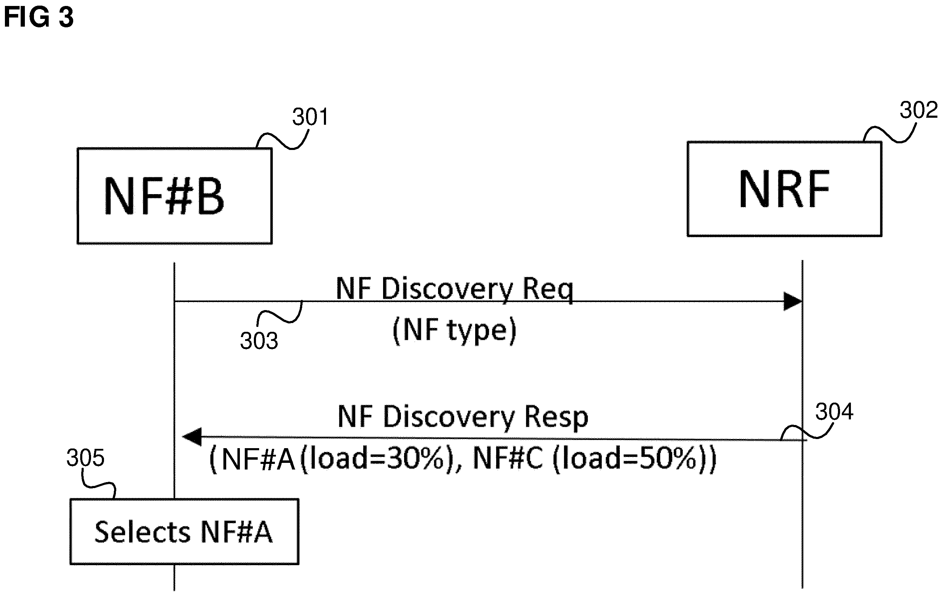

Figure 3 illustrates a discovery of the first network function (NF#A) by a second network function 301 (NF#B) with help of an NRF 302 (corresponding to NRF 202).

For NRF-based discovery and selection, the first NF (or NF instance) 201, for being able to be discovered, registers itself (or updates its registration) with the NRF 202 in 203. With the registration (or update), the first NF 201 may provide an information about its load to the NRF 202. The NRF 202 responds in 204 accordingly.

During the discovery, the NRF 302 provides the load information to the second NF 301 performing the discovery (i.e. the service consumer in that case).

The second NF 301 may use the available information (e.g. NF load information) to select the appropriate NF (or NF instance), here the first NF 201 (NF#A).

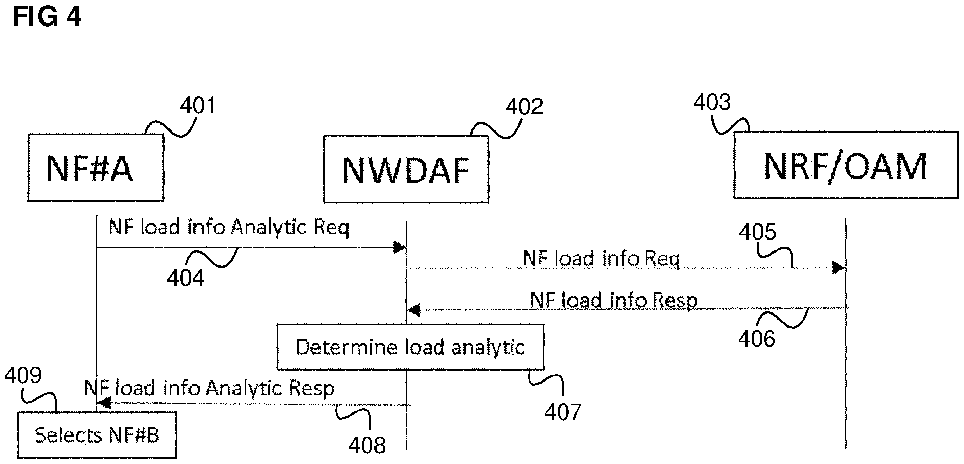

Figure 4 illustrates NWDAF-based NF selection.

In 404, an NF (or NF instance) 401 subscribes for NF load analytics with an NWDAF 402.

In 405 and 406, the NWDAF 402 collects NF load information from an NRF and/or OAM 403.

Table 1 shows examples for the NF load information.

**Table 1**

| **Information** | **Source** | **Description** |
|---|---|---|
| NF load | NRF | The load of specific NF instance(s) in their NF profile |
| NF status | NRF | The status of a specific NF instance(s) (registered, suspended, undiscoverable) |
| NF resource usage | OAM | The usage of assigned virtual resources currently in use for specific NF instance(s) (mean usage of virtual CPU, memory, disk) |
| NF resource configuration | OAM | The life cycle changes of specific NF resources (e.g. NF operational or interrupted during virtual/physical resources reconfiguration) |

In 407, the NWDAF 402 determines load analytic information using the collected NF load information and provides it to the NF 401 in 408 (which is the service consumer in this case).

The NF load analytic information may include NF load statistics as well as NF load predictions.

Table 2 shows examples for NF load statistics.

**Table 2**

| **Information** | **Description** |
|---|---|
| List of resource status (1..max) | List of observed load information for each NF instance along with the corresponding NF id / NF Set ID (as applicable). |
| > NF type | Type of the NF instance. |
| > NF instance ID | Identification of the NF instance. |
| > NF status | The availability status of the NF on the Analytics target period, expressed as a percentage of time per status value (registered, suspended, undiscoverable). |
| > NF resource usage | The average usage of assigned resources (CPU, memory, disk). |
| > NF load | The average load of the NF instance over the Analytics target period. |
| > NF peak load (optional) | The maximum load of the NF instance over the Analytics target period. |
| > NF load (per area of interest) | The average load of the NF instances over the area of interest. |

Table 3 shows examples for NF load predictions.

**Table 3**

| **Information** | **Description** |
|---|---|
| List of resource status (1..max) | List of predicted load information for each NF instance along with the corresponding NF id / NF Set ID (as applicable) |
| > NF type | Type of the NF instance |
| > NF instance ID | Identification of the NF instance |
| > NF status (NOTE 1) | The availability status of the NF on the Analytics target period, expressed as a percentage of time per status value (registered, suspended, undiscoverable) |
| > NF resource usage (NOTE 1) | The average usage of assigned resources (CPU, memory, disk) |
| > NF load (NOTE 1) | The average load of the NF instance over the Analytics target period |
| > NF peak load (optional) (NOTE 1) | The maximum load of the NF instance over the Analytics target period |
| > Confidence | Confidence of this prediction |

In 409, the NF 401 then selects another network function (i.e. a service provider) taking the load analytic information into account.

This means that in addition to NF load information provided by NRF during the NF discovery, an NF may use load analytic information to select an appropriate NF (or NF instance).

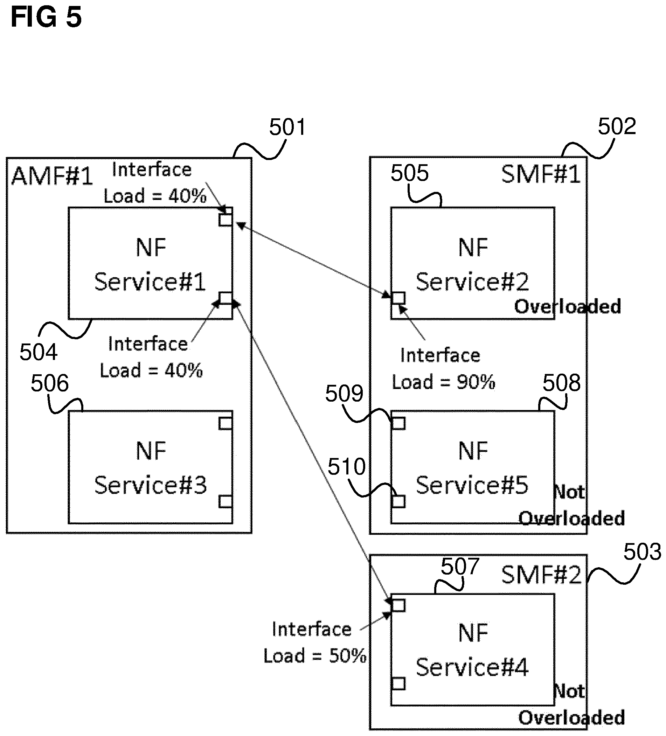

Figure 5 shows an example of a selection, by an AMF 501, of an SMF from among an SMF group including a first SMF 502 and a second SMF 503.

It is assumed that the AMF 501, the first SMF 502 and the second SMF 503 are not overloaded on the NF level.

The AMF 501 provides a first NF service 504 and a third NF service 506, the first SMF 502 provides a second NF service 505 and a fifth NF service 508 and the second SMF 503 provides a fourth NF service 507.

Each NF service (or NF/NF instance) provides an interface or link (e.g. the fifth NF service 508 provides an NF interface which may for example be used by the AMF 501). An NF service (or NF/NF instance) may have multiple NF service (or NF/NF instance) interfaces or links. For example the fifth NF service 508 has two NF service interfaces 509, 510. These may map to the same NF interface.

It is assumed that the first NF service 504, the third NF service 506, the fourth NF service 507 and the fifth NF service 508 are not overloaded on the NF service level but that the second NF service 505 is getting close to becoming overloaded but is not yet overloaded.

In this example, it is typically not appropriate for the AMF to select the first SMF 502, because the second NF service is almost overloaded, even if the first SMF 502 is not overloaded.

However, since according to the approaches of figures 2 to 4 the AMF 501 (as NF performing the selection) would at best have the information that both SMFs 502, 503 are not overloaded, it may select the first SMF 502.

According to various embodiments, approaches are described which avoid such a selection which is not appropriate. Specifically, according to various embodiments, the NF doing the discovery and selection (here the AMF 501) is informed about a load of the second NF service, i.e. rather than being informed only about the load on NF level, it is informed about the load on an NF link level, i.e. on an NF interface level (i.e. per network function service provided by an NF) or even on an NF service interface level (i.e. per interface of the NF services provided by an NF). This means that a link load may refer to the load of an NF interface or to the load of an NF service interface. Instead of being informed about the raw link load information, the NF doing the discovery and selection (here the AMF 501) may also be informed about link load analytics information from an NWDAF.

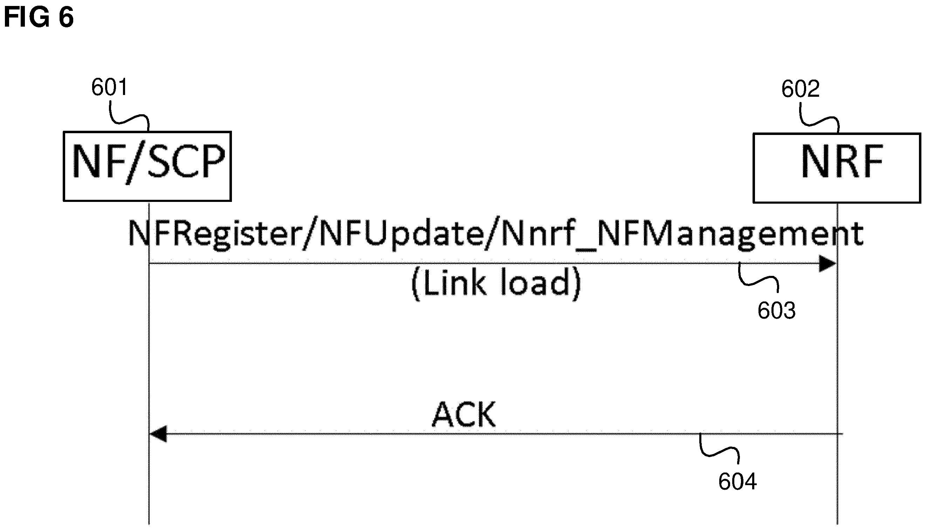

Figure 6 illustrates a registration of a network function 601 (possibly via an SCP) at an NRF 602 for an NRF based NF selection.

Similarly to figure 2, for NRF-based discovery and selection, the NF (or NF instance) 601, for being able to be discovered, registers itself (or updates its registration) with the NRF 602 in 603 (possibly via an SCP).

In addition to what is done in the procedure of figure 2, the NF 601 may (e.g. in addition to its load) provide load link information with the registration (or update) provided to the NRF 602.

The NRF 602 acknowledges in 604.

The link load information is for example an array, e.g. an array of [source NF instance, target NF instance, time stamp, load information]. This example assumes that each link (NF interface of NF service interface) is dedicated to (and thus associated with) a specific target NF. In this case, the NF 601 can provide an identification of the target NF. For example,
Array of [AMF address, SMF address, time stamp, AMF load info]
for the case of an association of AMF links with SMFs and
Array of [AMF address, UDM address, time stamp, AMF load info] for the case of an association of AMF links with UDMs.

It should be noted that when the deployed architecture does not use SCP or when each SCP is attached to an NF instance, the specification of the source NF instance can be omitted.

The data types "NFProfile" and "NFService" optionally include this link load information.

The NF 601 (or SCP) may, in 603, for example use an NFRegister, an NFUpdate or an Nnrf_NFManagement service to notify the link load information to the NRF.

NRF-based discovery and selection is done similarly to figure 3 but the NF which does the discovery and selection (e.g. NF 601 in the present example, taking the place of NF 301 in figure 3) may take into account link load information. This means that for NRF-based selection, the NRF 602 provides the link load information to the service consumer (i.e. NF 601) such that consumer can also use the link load information for the NF selection. Alternatively, the NRF generates a list of suitable NFs wherein it takes the link load information into account and the service consumer takes one service provider from it.

The NRF may also provide the link load information to an NWDAF for NWDAF-based NF selection.

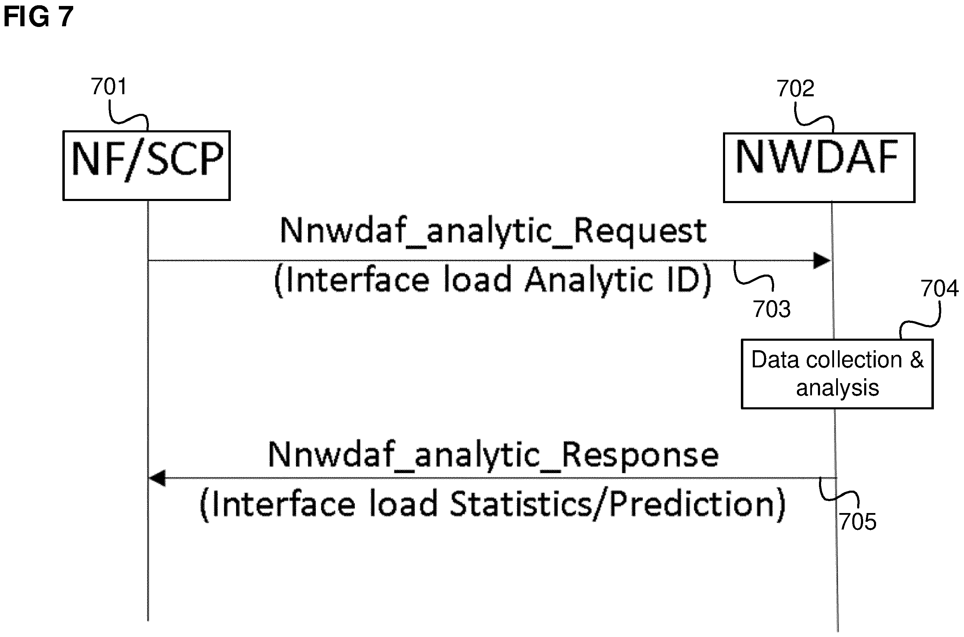

Figure 7 illustrates NWDAF-based NF selection.

In 703, an NF (or instance) 701 subscribes for NF load analytic information with an NWDAF 702 or requests NF load analytic information from the NWDAF 702. This may be done via an SCP.

In 704, the NWDAF 702 collects NF link load information and performs link load analytics, i.e. determines link load analytic information using the collected link load information and provides it to the NF 701 in 705.

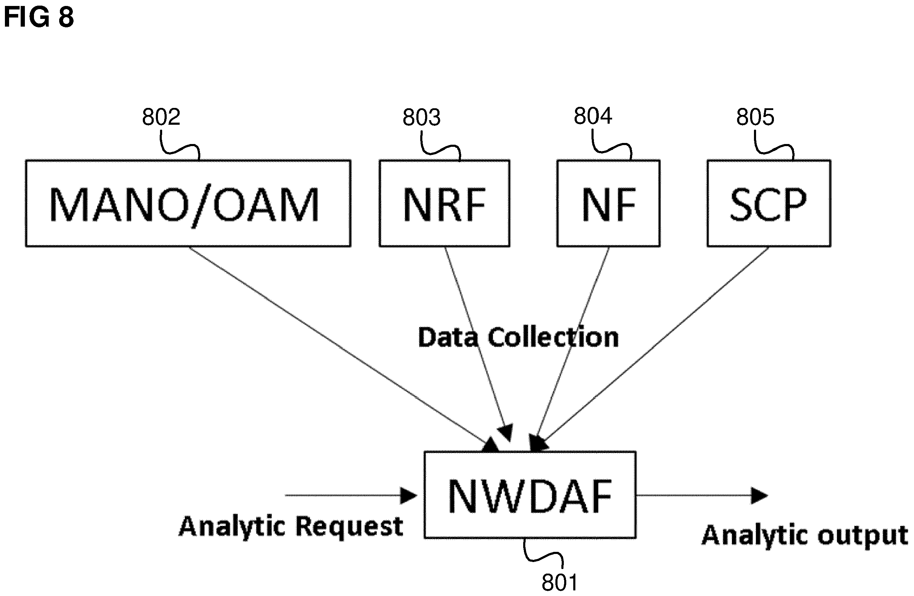

Figure 8 illustrates the collection of link load information by an NWDAF 801.

Upon reception of a request (or subscription) for analytics (e.g. from NF 701), the NWDAF 801 gathers link load information from, for example, an OAM (or MANO (Management and Orchestration)) 802, an NRF 803 or NF 804 or SCP 805. The NWDAF may determine how to collect the link load information used as input for the analytics.

The NRF 802 may collect the data by subscribing to corresponding services, e.g. using a NFStatusSubscribe message to the NRF 803 such that it will be provided with information by a NFStatusNotify.

The NWDAF 801 can directly get the link (e.g. interface) load data from the NF instance(s) or SCP(s) (or OAM). For example, if an SCP is not deployed, the NWDAF 801can get the data directly from an NF instance.

The NF service consumer (e.g. NF 701) may request (or subscribe to) the NF interface load analytic information by providing an identification of the NF(s) for which it requests load analytic information, an identification of the NF service(s) for which it requests load analytic information, an S-NSSAI (Single - Network Slice Selection Assistance Information), i.e. identification of a network slice containing NFs for which it requests load analytic information and an AoI (Area of Interest) containing NFs for which it requests load analytic information as input parameters for the NWDAF 801.

In the NF load analytics procedure, the NF consumer (e.g. 701) can for example request link load analytics information using an "interface load" field in the analytic request information.

From the collected data, the NWDAF 801 generates analytic (output) information, i.e. link load analytic information and provides it to the service consumer (e.g. NF 701). The service consumer may then perform selection using the analytic information. The NWDAF 801 can provide the analytic information per NF service interface or for all NF services of a NF.

The link load analytic information may include link load statistics and link load predictions.

Table 4 shows examples for the link load information (i.e., data collection related to the link information) for the case that the link corresponds to a service interface. As explained above, the link may also correspond to an NF interface. Analogous link load information may be used for the case that the link corresponds to an NF interface (or NF instance interface; it should be noted that an NF instance interface is also understood as an NF interface).

**Table 4**

| **Information** | **Source** | **Description** |
|---|---|---|
| NF service interface load | NRF | The load of specific NF service interface |
| NF service interface status | NRF | The status of a specific NF service interface (registered, suspended, undiscoverable) |
| NF service interface resource usage | OAM | The usage of assigned virtual resources currently in use for specific NF service interface (mean usage of virtual CPU, memory, disk) |
| NF service interface resource configuration | OAM | The life cycle changes of specific NF service interface resources (e.g. NF service interface operational or interrupted during virtual/physical resources reconfiguration) |
| NF service interface load | NF | Input/output signalling of an NF service interface |
| NF service interface status | NF | The status of a specific NF service interface (registered, suspended, undiscoverable) |
| NF service interface load | SCP | The load of specific NF service interface |

Table 5 shows examples for link load statistics for the case that the link corresponds to a service interface. Analogous link load statistics may be used for the case that the link corresponds to an NF interface (or NF instance interface).

**Table 5**

| **Information** | | | **Description** |
|---|---|---|---|
| List of resource status (1..max) | | | List of observed load information for each interface of a NF instance. |
| > NF type | | | Type of the NF instance. |
| > NF instance ID | | | Identification of the NF instance. |
| > NF service and interface ID(s) | | | Identification of the NF service and their links |
| > NF service interface status | | | Average ratio of interfaces that have been up and running during the entire Analytics target period. |
| > NF service interface resource usage | | | The average usage of assigned resources (CPU, memory, disk). |
| | > Performance | | Performance indicators. |
| | | >> Average Traffic rate | Average traffic rate observed at the interface. |
| | | >> Maximum Traffic rate | Maximum traffic rate observed at the interface. |
| | | >>Average Packet rate | Average packet delay observed at the interface |
| | | >>Maximum Packet rate | Maximum packet delay observed at the interface |
| | | >> Average Packet Loss Rate | Average packet loss observed at the interface |

Table 6 shows examples for link load predictions for the case that the link corresponds to a service interface. Analogous link load predictions may be used for the case that the link corresponds to an NF interface (or NF instance interface).

**Table 6**

| **Information** | | | **Description** |
|---|---|---|---|
| List of resource status (1..max) | | | List of predicted load information for each interface of each NF instance along with the corresponding NF id / NF Set ID (as applicable) |
| > NF type | | | Type of the NF instance |
| > NF instance ID | | | Identification of the NF instance |
| > NF service and interface ID(s) | | | Identification of the NF service and their links |
| > NF service interface status | | | Average ratio of interfaces that have been up and running during the entire Analytics target period. |
| > NF service interface resource usage | | | The average usage of assigned resources (CPU, memory, disk). |
| | > Performance | | Performance indicators. |
| | | >> Average Traffic rate | Average traffic rate predicted at the interface. |
| | | >> Maximum Traffic rate | Maximum traffic rate predicted at the interface. |
| | | >>Average Packet rate | Average packet delay predicted at the interface |
| | | >>Maximum Packet rate | Maximum packet delay predicted at the interface |
| | | >> Average Packet Loss Rate | Average packet loss predicted at the interface |

In addition to performing link load (i.e. NF interface or NF service interface) load analytics, the NWDAF may also perform C-plane (control plane of the core network) graph load analytics. For this, the NWDAF understands the load conditions of C-plane as a graph i.e. structure of nodes being connected to each other having a interface between two of them (considering NF load as well as link, e.g. interface, load). This may enable the NWDAF to help load balancing and congestion control, e.g. in 5GS SBA (service-based architecture). C-plane graph load analytics may take both the interface load information and NF load information as input. For example, the NWDAF analyses interface load information and NF load information all together and provides statistics and predictions for C-plane graph load.

The NWDAF 801 may also takes the interface load into an account when performing network slice load analytics to the determine the slice load more accurately.

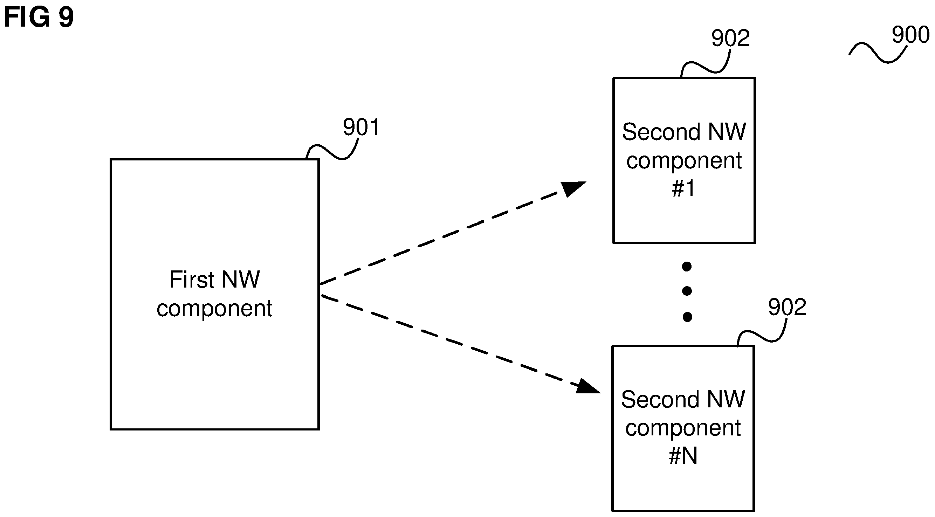

In summary, according to various embodiments, a communication network is provided as illustrated in FIG. 9.

FIG. 9 shows a communication network 900 according to an embodiment.

The communication network includes a first network component 901 and a group of second network components 902, wherein each second network component provides multiple links.

The first network component 901 is configured to select a second network component 902 from the group of second network components (e.g. for provision of a network function service) based on information depending on link loads of the links provided by the second network components 902.

According to various embodiments, in other words, in a communication network (e.g. a 5G or 6G core network) the selection of a network component, e.g. a network function or network function instance, depends on link load, i.e. depends on load on a link level (e.g. NF interface or service interface level).

It should be noted that the first and second network components are not necessarily might core network components, but can be any network components, which may be in the core network or in the radio access network. For example, a network function in the RAN may use link load information to select an AMF with which to communicate.

It should further be noted that selecting a network component based on information depending on link loads may directly using link load information (i.e. information specifying the loads of the links, e.g. 60%) or may also include using information which is derived from (and thus depends on) the link loads for the selection, for example link load analytic information or a list of suitable network functions (or network function services) which is generated (by another component of the communication network, e.g. an NRF) taking into account the link loads.

The first network component may also select a service provided by one of the second network components. In that case, it may select a second network component implicitly by selecting a network function service provided by that second network component (which is then the selected second network component).

Each link may be associated with computational resources, i.e. may be provided with respective computational resources. This may include provision of one or more respective interfaces via which the link is provided. The load of the link may be a load of these computational resources.

The first network component may select the second network component with the minimum link loads, the minimum average link loads, providing a network function service (required by the first network component) with the minimum load etc. Similarly, the first network component may select the network function service with the minimum load. The first network component may also select a second network component or network function service whose load is below a predefined threshold. In summary, the first network component may select the second network component (or a network function service) based on a predefined load balancing criterion. It may then request the selected second network component to provide the network function service.

According to various embodiments, the approach of figure 9 allows a more effective load balancing compared to performing NF or NF service selection based on load on NF level. Load link information may also be used as a basis for performing analytics which allows a more accurate (and thus useful) load prediction (compared to performing analytics on NF load level) and thus, if the analytics information is used for NF selection of NF service selection, allows more effective load balancing.

According to various embodiments, the service provider (NF or NF instance) which is to be discovered may use a newly introduced parameter of NF link (e.g. interface) load related information to provide link load information to an NWDAF or to an NRF as part of NF profile. It may communicate with the NWDAF with a newly introduced Analytic ID (e.g. "NF Service Interface Load analytics"). It performs selection of an NF (or NF instance) or NF service based on the output analytics provided by the NWDAF.

According to various embodiments, the NRF considers the NF link (e.g. service interface) load when providing a list of suitable NF producers to a requesting NF. It allows NFs (to be discovered) to update their NF link load information.

In case an SCP is deployed, the SCP may perform the selection of an NF (i.e. service producer) based on the NF link load. For example, the SCP may communicate with the NWDAF with a newly introduced Analytic ID (e.g. "NF Service Interface Load analytics"). It performs selection of an NF (or NF instance) or NF service based on the output analytics provided by the NWDAF.

The NWDAF may exposes "NF link load" and/or " C-plane graph load analytics" analytics and provide a logic to determine the sources for data collection for NF link load and/or C-plane graph load analytics. It determines the statistical information and predictions of the NF link load and/or C-plane graph load analytics.

The methods described may be performed and the components of the communication network described may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

## Claims

1. A communication network arrangement comprising:
a first network component (501, 901) and
a group of second network components (502, 503, 902), wherein each second network component (502, 503, 902) provides multiple links (509, 510);
wherein the first network component (501, 901) is configured to select a second network component (502, 503, 902) from the group of second network components (502, 503, 902) based on information depending on link loads of the links (509, 510) provided by the second network components (502, 503, 902),
wherein, for each second network component (502, 503, 902), each link (509, 510) provided by the second network component (502, 503, 902) corresponds to either a network function interface of the second network component (502, 503, 902) and the link loads are loads of the network function interfaces, or to a network function service interface (509, 510) of a network function service (505, 507, 508) of the second network component (502, 503, 902) and the link loads are loads of the network function service interfaces (509,510).

2. The communication network arrangement of claim 1, wherein
the first network component (501, 901) is a network component in a core network and the second network component (502, 503, 902) is a network component in the core network; or
the first network component (501, 901) is a network component in a radio access network and the second network component (502, 503, 902) is a core network component in the core network; or
the first network component (501, 901) is a network component in the core network and the second network component (502, 503, 902) is a network component in the radio access network.

3. The communication network arrangement of claim 1 or 2, wherein the first network component (501, 901) is a first network function or a first network function instance and the second network components (502, 503, 902) are second network functions or second network function instances.

4. The communication network arrangement of claim 1, wherein each network function interface corresponds to a network function service (505, 507, 508) and the link loads are loads of the network function services (505, 507, 508).

5. The communication network arrangement of any one of claims 1 to 4, wherein the first network component (501, 901) is configured to select a network function service (505, 507, 508) of a group of network function services (505, 507, 508) provided by the second network components (502, 503, 902) based on the link loads.

6. The communication network arrangement of any one of claims 1 to 5, wherein the information depending on the link loads is link load analytics information derived from the link loads.

7. The communication network arrangement of claim 6, comprising an analytics component configured to derive the link load analytics information from the link loads and to provide the link load analytics information to the first network component (501, 901).

8. The communication network arrangement of claim 7, wherein the analytics component is a Network Data Analytics Function.

9. The communication network arrangement of claim 7 or 8, wherein the analytics component is configured to determine an overall control plane load from the link loads and loads of the second network components (502, 503, 902).

10. The communication network arrangement of any one of claims 1 to 9, wherein the first (501, 901) and/or the second network component (502, 503, 902) is an Access and Mobility Management Function, or a Session Management Function, or a Policy Control Function or a Service Communications Proxy or Network Exposure Function, or Application Function, or Network Repository Function, or Network Slice Admission Control Function, or Network Slice Specific Authentication and Authorization Function, Network Slice Selection Function, or any other network function in the core network.

11. The communication network arrangement of any one of claims 1 to 10, comprising a repository component, wherein each second network component (502, 503, 902) is configured to provide information about the loads of the links (509, 510) it provides to the repository component and
wherein the repository component
is configured to provide the information about the load of the links (509, 510) provided by the second network components (502, 503, 902) to the first network component (501, 901) and the first network component (501, 901) is configured to select the second network component (502, 503, 902) based on the provided information or
is configured to generate a list of suitable second network components (502, 503, 902) from the link loads and the first network component (501, 901) is configured to take a second network component (502, 503, 902) from the list as selected second network component (502, 503, 902).

12. The communication network arrangement of claim 11, wherein the repository component is configured to generate a list of suitable network function services (505, 507, 508) from the link loads and the first network component (501, 901) is configured to take a network function service (505, 507, 508) from the list as selected network function service (505, 507, 508).

13. A method for selecting via a first network component (501, 901) a network component of a group of second network components (502, 503, 902), wherein each network component of the group of second network components (502, 503, 902) provides multiple links (509, 510), comprising by the first network component (501, 901), selecting a network component from the group of second network components (502, 503, 902) based on information depending on link loads of the links (509, 510) provided by the second network components (502, 503, 902),
wherein, for each network component of the group of second network components (502, 503, 902), each link (509, 510) provided by the network component corresponds to either a network function interface of the network component and the link loads are loads of the network function interfaces, or to a network function service interface (509,510) of a network function service (505, 507, 508) of the network component and the link loads are loads of the network function service interfaces (509,510).

14. A computer program and a computer readable medium including instructions, which, when executed by a computer of a communication network arrangement, make the computer perform the method according to claim 13.

## Patentansprüche

1. Kommunikationsnetzwerkanordnung, aufweisend:
eine erste Netzwerkkomponente (501, 901) und
eine Gruppe von zweiten Netzwerkkomponenten (502, 503, 902), wobei jede zweite Netzwerkkomponente (502, 503, 902) mehrere Verbindungen (509, 510) bereitstellt;
wobei die erste Netzwerkkomponente (501, 901) so konfiguriert ist, dass sie eine zweite Netzwerkkomponente (502, 503, 902) aus der Gruppe der zweiten Netzwerkkomponenten (502, 503, 902) auf der Grundlage von Information auswählt, die von den Verbindungslasten der von den zweiten Netzwerkkomponenten (502, 503, 902) bereitgestellten Verbindungen (509, 510) abhängt,
wobei für jede zweite Netzwerkkomponente (502, 503, 902) jede von der zweiten Netzwerkkomponente (502, 503, 902) bereitgestellte Verbindung (509, 510) entweder einer Netzwerkfunktionsschnittstelle der zweiten Netzwerkkomponente (502, 503, 902) entspricht und die Verbindungslasten und die Verbindungslasten Lasten der
Netzwerkfunktionsschnittstellen sind, oder einer Netzwerkfunktionsdienstschnittstelle (509, 510) eines Netzwerkfunktionsdienstes (505, 507, 508) der zweiten Netzwerkkomponente (502, 503, 902) entspricht und die Verbindungslasten Lasten der Netzwerkfunktionsdienstschnittstellen (509, 510) sind.

2. Kommunikationsnetzwerkanordnung nach Anspruch 1, wobei
die erste Netzwerkkomponente (501, 901) eine Netzwerkkomponente in einem Kernnetzwerk ist und die zweite Netzwerkkomponente (502, 503, 902) eine Netzwerkkomponente in dem Kernnetzwerk ist; oder
die erste Netzwerkkomponente (501, 901) eine Netzwerkkomponente in einem Funkzugangsnetzwerk ist und die zweite Netzwerkkomponente (502, 503, 902) eine Kernnetzwerkkomponente im Kernnetzwerk ist; oder
die erste Netzwerkkomponente (501, 901) eine Netzwerkkomponente im Kernnetzwerk ist und die zweite Netzwerkkomponente (502, 503, 902) eine Netzwerkkomponente im Funkzugangsnetzwerk ist.

3. Kommunikationsnetzwerkanordnung nach Anspruch 1 oder 2, wobei die erste Netzwerkkomponente (501, 901) eine erste Netzwerkfunktion oder eine erste Netzwerkfunktionsinstanz ist und die zweiten Netzwerkkomponenten (502, 503, 902) zweite Netzwerkfunktionen oder zweite Netzwerkfunktionsinstanzen sind.

4. Kommunikationsnetzwerkanordnung nach Anspruch 1, wobei jede Netzwerkfunktionsschnittstelle einem Netzwerkfunktionsdienst (505, 507, 508) entspricht und die Verbindungslasten Lasten der Netzwerkfunktionsdienste (505, 507, 508) sind.

5. Kommunikationsnetzwerkanordnung nach einem der Ansprüche 1 bis 4, wobei die erste Netzwerkkomponente (501, 901) konfiguriert ist, einen Netzwerkfunktionsdienst (505, 507, 508) aus einer Gruppe von Netzwerkfunktionsdiensten (505, 507, 508), die von den zweiten Netzwerkkomponenten (502, 503, 902) bereitgestellt werden, basierend auf den Verbindungslasten auszuwählen.

6. Kommunikationsnetzwerkanordnung nach einem der Ansprüche 1 bis 5, wobei die von den Verbindungslasten abhängige Information eine aus den Verbindungslasten abgeleitete Verbindungslast-Analyseinformation ist.

7. Kommunikationsnetzwerkanordnung nach Anspruch 6, die eine Analysekomponente aufweist, die so konfiguriert ist, dass sie die Verbindungslast-Analyseinformation aus den Verbindungslasten ableitet und die Verbindungslast-Analyseinformation an die erste Netzwerkkomponente (501, 901) liefert.

8. Kommunikationsnetzwerkanordnung nach Anspruch 7, wobei die Analysekomponente eine Netzwerkdaten-Analysefunktion ist.

9. Kommunikationsnetzwerkanordnung nach Anspruch 7 oder 8, wobei die Analysekomponente so konfiguriert ist, dass sie aus den Verbindungslasten und den Lasten der zweiten Netzwerkkomponenten (502, 503, 902) eine Gesamtsteuerungsebenenlast bestimmt.

10. Kommunikationsnetzwerkanordnung nach einem der Ansprüche 1 bis 9, wobei die erste (501, 901) und/oder die zweite Netzwerkkomponente (502, 503, 902) eine Zugangs- und Mobilitätsmanagementfunktion oder eine Sitzungsmanagementfunktion oder eine Richtliniensteuerungsfunktion oder ein Dienstkommunikationsproxy oder eine Netzwerkexponierfunktion oder eine Applikationsfunktion oder eine Netzwerk-Repository-Funktion oder eine Netzwerk-Partitions- Zulassungssteuerungsfunktion oder eine Netzwerk-Partitions-spezifische Authentifizierungs- und Autorisierungsfunktion, eine Netzwerk-Partitions-Auswahlfunktion oder eine beliebige andere Netzwerkfunktion im Kernnetzwerk ist.

11. Kommunikationsnetzwerkanordnung nach einem der Ansprüche 1 bis 10, mit einer Repository-Komponente, wobei jede zweite Netzwerkkomponente (502, 503, 902) so konfiguriert ist, dass sie der Repository-Komponente Information über die Auslastung der von ihr bereitgestellten Verbindungen (509, 510) bereitstellt und
wobei die Repository-Komponente
konfiguriert ist, die Information über die Last der Verbindungen (509, 510), die von den zweiten Netzwerkkomponenten (502, 503, 902) bereitgestellt werden, der ersten Netzwerkkomponente (501, 901) bereitzustellen, und die erste Netzwerkkomponente (501, 901) konfiguriert ist, die zweite Netzwerkkomponente (502, 503, 902) basierend auf der bereitgestellten Information auszuwählen, oder
konfiguriert ist, eine Liste geeigneter zweiter Netzwerkkomponenten (502, 503, 902) aus den Verbindungslasten zu erzeugen, und die erste Netzwerkkomponente (501, 901) konfiguriert ist, eine zweite Netzwerkkomponente (502, 503, 902) aus der Liste als ausgewählte zweite Netzwerkkomponente (502, 503, 902) zu nehmen.

12. Kommunikationsnetzwerkanordnung nach Anspruch 11, wobei die Repository-Komponente so konfiguriert ist, dass sie eine Liste geeigneter Netzwerkfunktionsdienste (505, 507, 508) aus den Verbindungslasten erzeugt, und die erste Netzwerkkomponente (501, 901) so konfiguriert ist, dass sie einen Netzwerkfunktionsdienst (505, 507, 508) aus der Liste als ausgewählten Netzwerkfunktionsdienst (505, 507, 508) übernimmt.

13. Verfahren zum Auswählen einer Netzwerkkomponente aus einer Gruppe von zweiten Netzwerkkomponenten (502, 503, 902) über eine erste Netzwerkkomponente (501, 901), wobei jede Netzwerkkomponente der Gruppe von zweiten Netzwerkkomponenten (502, 503, 902) mehrere Verbindungen (509, 510) bereitstellt, wobei die erste Netzwerkkomponente (501, 901) eine Netzwerkkomponente aus der Gruppe der zweiten Netzwerkkomponenten (502, 503, 902) auf der Grundlage von Information auswählt, die von den Verbindungslasten der von den zweiten Netzwerkkomponenten (502, 503, 902) bereitgestellten Verbindungen (509, 510) abhängen,
wobei für jede Netzwerkkomponente der Gruppe von zweiten Netzwerkkomponenten (502, 503, 902) jede von der Netzwerkkomponente bereitgestellte Verbindung (509, 510) entweder einer Netzwerkfunktionsschnittstelle der Netzwerkkomponente entspricht und die Verbindungslasten Lasten der Netzwerkfunktionsschnittstellen sind, oder einer Netzwerkfunktionsdienstschnittstelle (509, 510) eines Netzwerkfunktionsdienstes (505, 507, 508) der Netzwerkkomponente entspricht und die Verbindungslasten Lasten der Netzwerkfunktionsdienstschnittstellen (509, 510) sind.

14. Ein Computerprogramm und ein computerlesbares Medium, das Anweisungen enthält, die, wenn sie von einem Computer einer Kommunikationsnetzwerkanordnung ausgeführt werden, den Computer veranlassen, das Verfahren nach Anspruch 13 durchzuführen.

## Revendications

1. Agencement de réseau de communication, comprenant :
un premier composant de réseau (501, 901) et
un groupe de deuxièmes composants de réseau (502, 503, 902), dans lequel chaque deuxième composant de réseau (502, 503, 902) fournit des liens multiples (509, 510) ;
dans lequel le premier composant de réseau (501, 901) est configuré pour sélectionner un deuxième composant de réseau (502, 503, 902) dans le groupe de deuxièmes composants de réseau (502, 503, 902) sur la base d'informations dépendant de charges de lien des liens (509, 510) fournis par les deuxièmes composants de réseau (502, 503, 902),
dans lequel, pour chaque deuxième composant de réseau (502, 503, 902), chaque lien (509, 510) fourni par le deuxième composant de réseau (502, 503, 902) correspond soit à une interface de fonction de réseau du deuxième composant de réseau (502, 503, 902) et les charges de lien sont des charges des interfaces de fonction de réseau, soit à une interface de service de fonction de réseau (509, 510) d'un service de fonction de réseau (505, 507, 508) du deuxième composant de réseau (502, 503, 902) et les charges de lien sont des charges des interfaces de service de fonction de réseau (509, 510).

2. Agencement de réseau de communication selon la revendication 1, dans lequel
le premier composant de réseau (501, 901) est un composant de réseau dans un réseau central et le deuxième composant de réseau (502, 503, 902) est un composant de réseau dans le réseau central ; ou
le premier composant de réseau (501, 901) est un composant de réseau dans un réseau d'accès radio et le deuxième composant de réseau (502, 503, 902) est un composant de réseau central dans le réseau central ; ou
le premier composant de réseau (501, 901) est un composant de réseau dans le réseau central et le deuxième composant de réseau (502, 503, 902) est un composant de réseau dans le réseau d'accès radio.

3. Agencement de réseau de communication selon la revendication 1 ou 2, dans lequel le premier composant de réseau (501, 901) est une première fonction de réseau ou une première instance de fonction de réseau et les deuxièmes composants de réseau (502, 503, 902) sont des deuxièmes fonctions de réseau ou des deuxièmes instances de fonction de réseau.

4. Agencement de réseau de communication selon la revendication 1, dans lequel chaque interface de fonction de réseau correspond à un service de fonction de réseau (505, 507, 508) et les charges de lien sont des charges des services de fonction de réseau (505, 507, 508).

5. Agencement de réseau de communication selon l'une quelconque des revendications 1 à 4, dans lequel le premier composant de réseau (501, 901) est configuré pour sélectionner un service de fonction de réseau (505, 507, 508) d'un groupe de services de fonction de réseau (505, 507, 508) fournis par les deuxièmes composants de réseau (502, 503, 902) sur la base des charges de lien.

6. Agencement de réseau de communication selon l'une quelconque des revendications 1 à 5, dans lequel les informations dépendant des charges de lien sont des informations d'analyse de charge de lien dérivées des charges de lien.

7. Agencement de réseau de communication selon la revendication 6, comprenant un composant d'analyse configuré pour dériver les informations d'analyse de charge de lien à partir des charges de lien et pour fournir les informations d'analyse de charge de lien au premier composant de réseau (501, 901).

8. Agencement de réseau de communication selon la revendication 7, dans lequel le composant d'analyse est une fonction d'analyse de données de réseau.

9. Agencement de réseau de communication selon la revendication 7 ou 8, dans lequel le composant d'analyse est configuré pour déterminer une charge de plan de contrôle globale à partir des charges de lien et de charges des deuxièmes composants de réseau (502, 503, 902).

10. Agencement de réseau de communication selon l'une quelconque des revendications 1 à 9, dans lequel le premier (501, 901) et/ou le deuxième composant de réseau (502, 503, 902) est une fonction de gestion d'accès et de mobilité, ou une fonction de gestion de session, ou une fonction de contrôle de politiques, ou un proxy de communication de services, ou une fonction d'exposition au réseau, ou une fonction d'application, ou une fonction de dépôt de réseau, ou une fonction de contrôle d'admission de tranche de réseau, ou une fonction d'authentification et d'autorisation spécifique à une tranche de réseau, une fonction de sélection de tranche de réseau, ou toute autre fonction de réseau dans le réseau central.

11. Agencement de réseau de communication selon l'une quelconque des revendications 1 à 10, comprenant un composant de dépôt, dans lequel chaque deuxième composant de réseau (502, 503, 902) est configuré pour fournir des informations sur les charges des liens (509, 510) qu'il fournit au composant de dépôt et
dans lequel le composant de dépôt
est configuré pour fournir les informations sur la charge des liens (509, 510) fournies par les deuxièmes composants de réseau (502, 503, 902) au premier composant de réseau (501, 901) et le premier composant de réseau (501, 901) est configuré pour sélectionner le deuxième composant de réseau (502, 503, 902) sur la base des informations fournies ou
est configuré pour générer une liste de deuxièmes composants de réseau appropriés (502, 503, 902) à partir des charges de lien et le premier composant de réseau (501, 901) est configuré pour prendre un deuxième composant de réseau (502, 503, 902) de la liste en tant que deuxième composant de réseau sélectionné (502, 503, 902).

12. Agencement de réseau de communication selon la revendication 11, dans lequel le composant de dépôt est configuré pour générer une liste de services de fonction de réseau appropriés (505, 507, 508) à partir des charges de lien et le premier composant de réseau (501, 901) est configuré pour prendre un service de fonction de réseau (505, 507, 508) dans la liste en tant que service de fonction de réseau sélectionné (505, 507, 508).

13. Procédé de sélection, via un premier composant de réseau (501, 901), d'un composant de réseau d'un groupe de deuxièmes composants de réseau (502, 503, 902), dans lequel chaque composant de réseau du groupe de deuxièmes composants de réseau (502, 503, 902) fournit des liens multiples (509, 510), comprenant, par le premier composant de réseau (501, 901), la sélection d'un composant de réseau dans le groupe de deuxièmes composants de réseau (502, 503, 902) sur la base d'informations dépendant de charges de lien des liens (509, 510) fournis par les deuxièmes composants de réseau (502, 503, 902),
dans lequel, pour chaque composant de réseau du groupe de deuxièmes composants de réseau (502, 503, 902), chaque lien (509, 510) fourni par le composant de réseau correspond soit à une interface de fonction de réseau du composant de réseau et les charges de lien sont des charges des interfaces de fonction de réseau, soit à une interface de service de fonction de réseau (509, 510) d'un service de fonction de réseau (505, 507, 508) du composant de réseau et les charges de lien sont des charges des interfaces de service de fonction de réseau (509, 510).

14. Programme informatique et support lisible par ordinateur comprenant des instructions qui, lorsqu'elles sont exécutées par un ordinateur d'un agencement de réseau de communication, font en sorte que l'ordinateur exécute le procédé selon la revendication 13.
